(19) Europäisches Patentamt
European Patent Office
Office européen des brevets

(11) **EP 4 461 849 B1**

(12) **EUROPEAN PATENT SPECIFICATION**

(45) Date of publication and mention
of the grant of the patent:
**30.04.2025 Bulletin 2025/18**

(21) Application number: **23020219.4**

(22) Date of filing: **11.05.2023**

(51) International Patent Classification (IPC):
*C25B 1/04* (2021.01)    *C25B 9/19* (2021.01)
*C25B 9/73* (2021.01)    *C25B 9/75* (2021.01)
*C25B 9/77* (2021.01)

(52) Cooperative Patent Classification (CPC):
**C25B 1/04; C25B 9/73; C25B 9/75; C25B 9/77;**
Y02E 60/36

(54) **AN ELECTROLYSER**

ELEKTROLYSEUR

ÉLECTROLYSEUR

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**13.11.2024 Bulletin 2024/46**

(73) Proprietor: **OÜ Stargate Hydrogen Solutions**
**11415 Tallinn (EE)**

(72) Inventors:
• **Grolig, Jan Gustav**
**11415 Tallinn (EE)**
• **Rahnel, Stina**
**11415 Tallinn (EE)**
• **Apaydin, Ardan**
**11415 Tallinn (EE)**
• **Akenpärg, Arko**
**11415 Tallinn (EE)**

(74) Representative: **Sarap, Margus**
**Jalaka 42-23**
**50109 Tartu (EE)**

(56) References cited:
**EP-A1- 2 993 254    EP-A1- 3 608 445**
**EP-A1- 4 151 775    CN-A- 113 964 362**

## Description

TECHNICAL FIELD

The present invention relates generally to an electrolyser, preferably an alkaline water electrolyser, and more specifically relates to a cell frame assembly of the alkaline water electrolyser.

BACKGROUND ART

In alkaline water electrolysis, water is electrochemically converted into hydrogen and oxygen in alkaline conditions: $H_2O = H_2 + 0.5 O_2$. An electrolysis cell comprises two electrodes: An anode and a cathode in an electrolyte. The electrolyte comprises a liquid alkaline medium such as an aqueous solution of hydroxides and/or carbonates. The alkaline electrolyte flows through the cells, which are connected fluidically in parallel, thereby immersing the electrodes in the electrolyte. During operation, an electric potential is applied between the two electrodes, resulting in the flow of electrolysis current through the electrolysis cell. During operation, hydrogen is generated on the cathode according to the hydrogen evolution reaction (HER): $2 H_2O + 2 e^- = H_2 + 2 OH^-$, while oxygen is generated on the anode according to the oxygen evolution reaction (OER): $2 OH^- = 0.5 O_2 + H_2O + 2 e^-$. The electrolysis cell further comprises a porous separator (diaphragm) and/or an ion exchange membrane capable of conducting hydroxide ions and separating both half-cells to prevent mixing of the product gases. The electrodes are placed on either side of the membrane in a sandwich-like manner.

It is advantageous to place the electrodes as close as possible to the membrane from both sides in a sandwich-like manner, which on one hand minimizes the distance between the electrodes and thus decreases the ionic resistance, and on other hand ensures that the hydrogen gas bubbles evolve mostly at the back side of the electrodes, which leads to reduced overpotentials. This arrangement, often referred to as "zero-gap configuration", thus results in improved cell efficiency. The positioning of the electrodes for this configuration is achieved by pressing the electrodes and the cell membrane together and adjusting the contact pressure via elastic or rigid spacers placed next to the electrodes on the sides opposite to the side facing the cell membrane. Furthermore, electrical contact to the electrodes is established via the bipolar plates, which are in contact with the spacers.

The cells are typically assembled in series in a "cell stack". The higher the number of cells in the stack, the more hydrogen and oxygen can be produced in unit time. Similarly, the larger the surface area (footprint) of each cell in the stack, the more hydrogen and oxygen can be produced per cell. The electrolyser stack consists of anode and cathode end plates and the cells are serially stacked between the end plates. In addition to providing electrical contact from cell to cell, bipolar plates also physically separate the anode side of one cell from the cathode side of an adjacent cell.

Each cell typically has a pair of cell frames that are essential for forming reaction chambers in the stack. The cell frames furthermore provide mechanical support to the cell components and in combination with gaskets prevent leakage of the alkaline electrolyte to the environment. However, most commonly the cell frames used on anode side are structurally different from the cell frames at cathode side, which is not a cost-efficient for manufacturing the cell frames.

A pressure electrolyser described in US7,591,932B2 comprises a cell frame made of two materials: an elastic material in longitudinal direction and the transverse direction of the electrolytic cell block. Secondly, the cell frame comprises a rigid material which runs in the circumferential direction, providing mechanical stability to the cell frame. The rigid material is connected to the elastic material, forming a shell-like frame structure or a frame-like insert. The elastic material of the cell frame is made of elastomer, or a soft elastic thermoplastic and the rigid material is made of metal or plastic. The drawback of this arrangement is that the electrolyte flowing through the alkaline electrolyser can affect the material of the elastic element over time, thus making it rigid, and by leaching out undesirable species from the elastic element. Furthermore, the system needs an additional pressure tank to enclose the electrolytic cell block to provide additional compression and insulation. The manufacturing process of the cell frame is also complicated due to the structure of the elastic material and the rigid material.

EP3696298A1 discloses a cell frame for an electrolysis or fuel cell block, with a receiving opening to receive a cell membrane and a plurality of collecting duct openings designed for electrolyte media discharge through the cell frame and a sealing structure which is used to seal the cell frame to the outside and / or the receiving opening and / or the duct openings is set up. The sealing structure is made up of a groove in the cell and a sealing element which is inserted in the groove. The sealing element is a cord seal or O-sealing ring. This setup requires multiple sealing elements to seal the cell, which increases design complexity of the cell frame and is not a cost-efficient option.

US8349151B2 describes a universal cell frame for Polymer Electrode Membrane (PEM) electrolyser. The cell frame has a central opening and four sets of transverse openings that are spaced 90 degrees apart. Two sets of openings being spaced apart at 180 degrees have internal pathways interconnected with central opening. The cell frame is configured to be used as anode frame as well as cathode frame by rotating the cell frame by 90 degrees. However, the presence of additional openings (essentially a "cross-flow" configuration) is not suitable for use in alkaline electrolyser, as product gases would become entrapped inside the cell frame with horizontal pathways. Furthermore, the surface area of the bipolar plate accommodates the inlet and outlet channels, hence the bipolar plates are in contact with the electrolyte passing through the channels. This arrangement increases the parasitic shunt currents flowing through the stack and results in reduced energy efficiency of the stack during operation.

EP3608445A1 (filed by THYSSENKRUPP on 2020-02-12) disclose D1 discloses a cell assembly comprising a cathode gasket and an anode gasket wherein a porous diaphragm is held between the gaskets and the said gaskets are arranged between a cathode cell frame and an anode frame. However, the prior art it neglects to detail a mechanism for securing a bipolar plate within the cell assembly.

EP2993254 A1 and EP4151775A1 by ASAHI CHEMICAL filed on 2016-03-09 and 2023-03-22 respectively disclose a gasket designed to hold the cell element, with the gasket positioned between cell frames. The said gasket includes a slit for inserting the cell element, thereby securing it in place. However, it is crucial to note that the manufacturing complexity associated with such a design poses a significant disadvantage. The slit in the gasket is tailored to accommodate a specific cell element thickness, leading to manufacturing complexities when dealing with cell elements of varying thicknesses. This limitation is a fundamental drawback as it restricts the universal applicability of a single gasket configuration across cell elements of different thicknesses.

In the view of foregoing, there is a need for improved cell frame design that reduces complexity and cost of the cell frame fabrication and eases electrolyser assembly.

DISCLOSURE OF INVENTION

The object underlying the present invention is to create a simplified alkaline electrolyser with an improved cell frame assembly in order to reduce internal leakage between the cells and provide a better sealing technique.

Another object of the present invention is to use a single gasket with each cell frame to provide sealing between adjacent cells as well as ensure that no leakage occurs from the cells to the outer environment.

The above object of the present invention can be achieved by the subject-matter of claims 1-15.

These and other objects and advantages of the present invention will become readily apparent from the following detailed description taken in conjunction with the accompanying drawings.

BRIEF DESCRIPTION OF THE DRAWINGS

The summary above, as well as the following detailed description of illustrative embodiments, is better understood when read in conjunction with the appended drawings. For the purpose of illustrating the present invention, exemplary constructions of the embodiments of the invention are shown in the drawings, with references to the following diagrams wherein:

Fig. 1 is an explanatory view of a cell frame assembly, Fig. 1A is a cross section view of the cell frame assembly, Fig. 1B is front view of the cell frame assembly.

Fig. 2 is a first surface and second surface of a cell frame, according to a preferred embodiment of the present invention.

Fig. 3 is a front view of a gasket with extended portions, according to a preferred embodiment of the present invention.

Fig. 4 is a cross sectional view of a cell arrangement comprising two cell frame assemblies, according to claim 1.

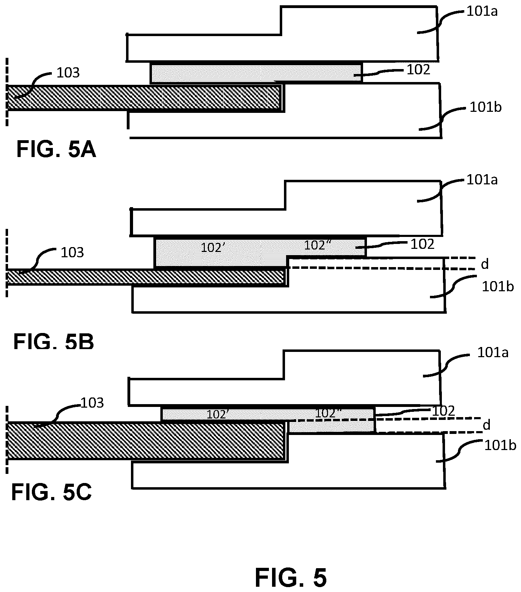

Fig. 5 is a cross section views of the cell assembly to illustrate compression of gasket according to three different embodiments of the present invention. Fig. 5A is a cross section view of the cell assembly wherein the thickness of the cell element is same as the depth of the groove of the cell frame. Fig. 5B is a cross section view of the cell assembly wherein the thickness of the cell element is lesser than the depth of the groove of the cell frame. Fig. 5C is a cross section view of the cell assembly wherein the thickness of the cell element is greater than the depth of the groove of the cell frame.

DETAILED DESCRIPTION OF THE INVENTION

In the following detailed description, a reference is made to the accompanying drawings that form a part hereof, and in which the specific embodiments that may be practiced is shown by way of illustration. These embodiments are described in sufficient detail to enable those skilled in the art to practice the embodiments and it is to be understood that the logical, mechanical and other changes may be made without departing from the scope of the embodiments.

The various embodiments herein describe an electrolyser stack comprising a plurality of cells stacked between a first end plate and a second end plate. The end plates serve as positive and negative terminals, respectively, to which DC power is supplied. The plurality of cells stacked together in a particular order between the end plates. Each cell in the stack comprises of a plurality of cell components, including but not limited to at least two electrodes (one acting as an anode and other as cathode) placed on either side of a cell membrane, a bipolar plate placed between the cells, and a plurality of spacers placed next to the electrodes on either side of electrode-cell membrane-electrode assembly. The positioning of the electrodes close to the cell membrane is achieved by applying compression via the spacers. A plurality of channels extends from the first end plate through the stack, the channels branching into the respective cells through a plurality of pathways. An electrolyte solution enters the stack through the inlet channels and each individual cell is fed with the electrolyte solution via the pathways emanating from the channels. During electrolysis process, the humidified gases produced exit from the cells through the pathways and leave the stack through outlet channels along with the electrolyte solution. A plurality of cell frame assemblies ensures the sealing of cell components. Furthermore, the cell components are supported by the plurality of cell frame assemblies. Each cell comprises atleast two cell frame assemblies wherein each cell assembly comprises a cell frame and a gasket. The end plates and the cells are compressed and clamped together using tie rods and bolts. The clamping provides sealing pressure and a proper pressure distribution between different cell components. The clamping also ensures electrical connection between the bipolar plates.

According to an embodiment of the present invention, the electrode can be shaped as perforated metal sheets with a porous surface, woven metal meshes or expanded metal sheets. The electrodes need to be long-term resistant against corrosion in alkaline environment as well as have good electrical conductivity and high electrochemical activity. The base material used in electrodes includes, but is not limited to, nickel containing material or steel substrate, where the steel substrate electrode needs to be coated with thin layer of nickel to avoid corrosion and facilitate catalytic activity. Furthermore, the electrode is preferably coated by an electrocatalyst to enable electrochemically activated surface, which improves the respective half-cell reaction. The electrocatalyst materials are preferably tailored to the half-cell reaction, thus the catalysts coating for cathode and anode differs. Preferably the cathode is often coated with a layer of Raney-nickel, Ruthenium dioxide ($RuO_2$), or other Mixed Metal Oxides (MMO's) and Molybdenum (Mo). Furthermore, nickel oxides and nickel and cobalt-based mixed oxides can also be used to further improve the electrochemical activity of the anode.

In the context of the present invention, the term "membrane" is used interchangeably with the terms "separator" and "diaphragm", and refers to the stack component comprising a polymer, porous or non-porous, that is used to separate the anode from the cathode and through which hydroxide ions are transported. The membrane needs to have a high thermal, chemical, and electrochemical resistance. Zirconium oxide-polysulfonic acid membranes are the preferably used, however membranes with different configurations with base material being an inorganic oxide supported by a polymer fabric are also suitable. The materials considered for membranes include, but not limited to, oxide-ceramic materials, sulfonated polymers, perfluorinated sulfonated polymers and fiberglass-reinforced polyphenylene sulfides or polysulfones with inorganic oxides.

The bipolar plates as well as the spacers are mainly fabricated from nickel or nickel-coated steel. The spacers need to be designed in a way that they possess spring-like properties so the electrodes can be lightly pressed against the membrane with the spacers.

The electrolyte solution is preferably an aqueous alkali hydroxide solution and particularly preferably an aqueous sodium hydroxide or potassium hydroxide solution. In context of the present invention, the stack comprises N number of the cells, 2×N are the number of the electrodes with N number of cell membranes and 2×N number of the cell frames with 2×(N+1) number of the gaskets and N-1 bipolar plates and two end plates.

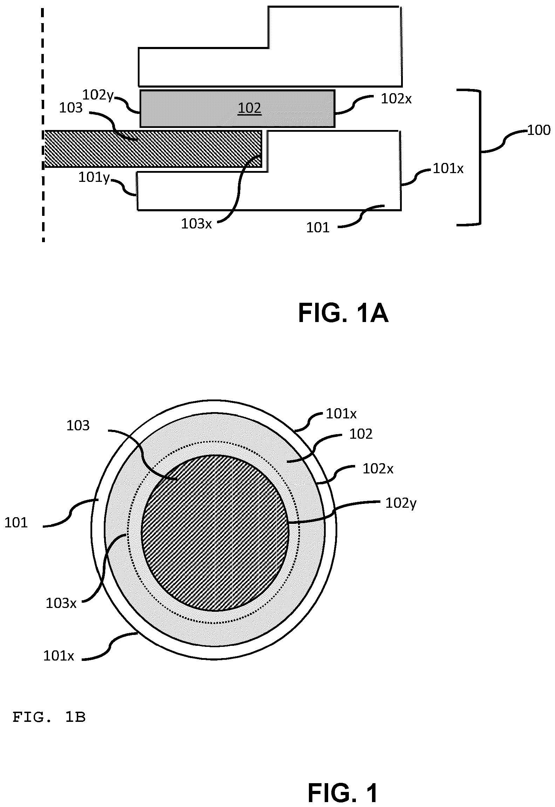

FIG. 1 illustrates a cell frame assembly (100).

As shown in Fig. 1A, the assembly (100) comprises a cell frame (101), a gasket (102) and a cell element (103). The cell element (103) comprises a peripheral edge (103x). The cell frame (101) comprising an outer peripheral edge (101x) and an inner peripheral edge (101y), demonstrates rigid characteristics to provide mechanical support to the cell components enclosed within the cell frame assembly (100). On the other hand, the gasket (102) exhibits compressible characteristics that facilitates the gasket (102) to hold the cell element (103) in its position when subjected to compression. The cell element (103) is interposed between the cell frame (101) and the gasket (102) in such a manner that the gasket (102) overlaps a predefined part of the cell frame (101) and a predefined part of the cell element (103). In order to achieve efficient sealing of the cell frame assembly (100), the gasket (102) is designed as a hollow loop of a predefined width and thickness, comprising an outer peripheral edge (102x) and an inner peripheral edge (102y).

As shown in Fig. 1B, the outer peripheral edge (102x) of the gasket (102) extends outwards beyond the peripheral edge (103x) of the cell element (103) in the direction of the outer peripheral edge (101x) of the cell frame (101) such that a predefined part of gasket (102) overlaps the cell frame (101). Relatively, the inner peripheral edge (102y) of the gasket (102) extends inwards away from the peripheral edge (103x) of the cell element (103) in the direction of the inner peripheral edge (101y) of the cell frame (101) such that a predefined part of the gasket (102) overlaps the cell element (103). The described assembly is exemplified as circular, but it is to be understood that the assembly components can be of any shape and their combination thereof within the scope of the invention.

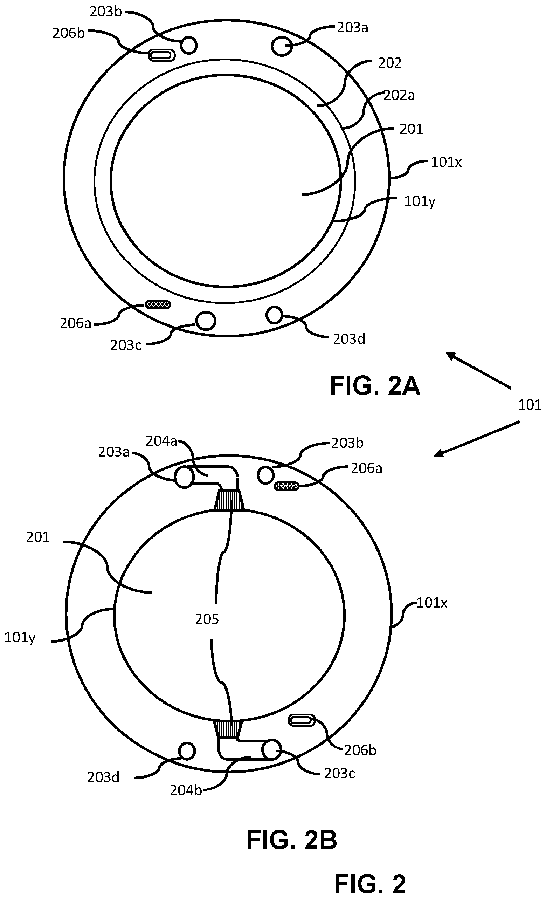

Fig. 2 illustrates frontal view of a cell frame, according to a preferred embodiment of the present invention. With respect to Fig. 2A, the cell frame (101) comprises a central opening (201) forming the inner peripheral edge (101y) of the cell frame (101). The cell frame (101) comprises a groove (202) of a predefined width and depth, the groove (202) forms a peripheral edge (202a) on the cell frame (101) in the space between the inner peripheral edge (101y) of the cell frame (101) and the outer peripheral edge (101x) of the cell frame (101). The width of groove (202) extends from the peripheral edge (202a) of the groove (202) to the inner peripheral edge (101y) of the cell frame (101). As the cell element (103) is received in the groove (202) of the cell frame (101), a spacing is provided between the peripheral edge (202a) of the groove (202) and the peripheral edge (103x) of the cell element (103) to compensate thermal expansion or contraction of the cell element during the startup, operation, and shutdown of the electrolyser. The groove (202) forms a step-like depression at the peripheral edge (202a); however, alternatively the groove (202) can vary to form different structures including, but not limiting to, a curved or inclined depression, a raised rib etc.

The cell frame (101) is primarily made of plastic including, but not limiting to, polysulfone, polyetheretherketone, acetal copolymer, polyethersulfone, polyphenylene, polyphenylene sulfide, polyphenylene oxide, polybenzimidazole, polyethyleneimine, polyamide-imides and other plastic polymers. The cell frame material can have fillers such as fibers, polyphenylene oxide and other suitable materials to provide additional strength and temperature tolerance. However, the cell frame can be made of metals, ceramics and other materials, and their combination thereof, with appropriate mechanical strength, thermal tolerance, electrically insulating properties and chemical resistance to withstand alkaline environment.

The cell frame (101) further comprises a plurality of channels (203a, 203b, 203c, 203d) for the media including, but not limited to, electrolyte solution and product gases, to enter and exit the cell. The cell frame furthermore comprises at least one pathway (204a, 204b) connecting at least one channel to the central opening of the cell frame (101). The pathways (204a, 204b) provide passage to supply and discharge media to/from the central opening (201) through the cell frame to reach the channels.

According to one embodiment herein, the channels (203a to 203d) are divided into two sets, each set comprising at least two channels, when one set of channels act as inlets then the other set of channels act as outlets. Referring to Fig. 2B, channels (203a, 203b) form one set and the channels (203c, 203d) form the second set of the channels. The functionality of channels (203a to 203d) as inlets and outlets depends on the arrangement of cell frame (101) with respect to the electrolyser stack. The channels in one set are placed apart by a predefined distance, positioned next to each other. However, the two sets of channels are placed at about 180 degrees apart.

Fig. 2B illustrates the positioning of channels (203a to 203d) in the cell frame (101), for example, considering the cell frame (101) to be arranged such that the channels (203a, 203b) are at the top section of the stack and the channels (203c, 203d) are at the bottom section of the stack. With this arrangement the channels (203a, 203b) act as outlets and function as product-gas discharging channels whereas the channels (203c, 203d) act as inlets and function as electrolyte solution supplying channels.

According to one embodiment herein, each set of channels has at least one pathway (204a, 204b) connecting the central opening (201) of the cell frame (101) to one of the channels in the said channel set. Hence each pathway is 180 degrees apart and forms an inlet pathway and an outlet pathway based on the placement of the cell frame (101). The inlet pathway supplies the electrolyte solution from the inlet channels to the cell whereas the outlet pathway discharges the gases produced by the cell to the outlet channels.

Again, with respect to Fig. 2B, pathway (204a) connects channel (203a) to the central opening (201) of the cell frame (101) and pathway (204b) connects channel (203c) to central opening (201) of the cell frame (101). Assuming that hydrogen is discharged at one side of the stack and oxygen is discharged at other side of the stack, the cell frame (101) discharging hydrogen is assembled to position the channel (203a, 203c) and the pathway (204a, 204b) on the hydrogen side of the cell. Similarly, when the cell frame (101) is placed at the oxygen side of the cell, the cell frame (101) is rotated circumferentially by 180 degrees with respect to the cell frame (101) at the hydrogen side so that the channel (203a, 203c) and the pathway (204a, 204b) are aligned to be at the oxygen side of the cell.

The cell frame (101) comprises a bridge (205) at the junction of the pathway and the central opening. When the gasket (102) is compressed against the cell frame (101), the bridge (205) avoids interference of the gasket (102) with the pathways (204a, 204b), so that the media is free to move to/from the cell to the respective channels through the pathway and ensures even gasket compression at the junction location. The bridge (205) is made of any material with rigid and non-compressible properties, mechanically resistant enough to prevent the gasket (102) from collapsing into the pathway.

The cell frame (101) has two sides, a first surface as depicted in Fig. 2A, and a second surface as depicted Fig. 2B. The groove (202) is placed preferably on the first surface of the cell frame (101), whereas the pathways (204a, 204b) and the bridge (205) are present on the second surface of the cell frame (101). Thus, when the cell frames (101) are arranged in alternating manner, the second surface of the cell frame (101) faces the first surface of the adjacent cell frame, the gasket (102) placed on the first surface of the cell frame (101) receives compression from the second surface of the adjacent cell frame.

Both sides of the cell frame (101) further comprise a plurality of protruding parts (206a) and recesses (206b) on both surfaces of the cell frame (101) to align the gasket (102) and the cell frame (101). Furthermore, the protruding parts (206a) of the cell frame fit into recesses of the adjacent cell frame to lock the two cell frames (101) in place.

The gasket is made up of thermoset materials including, but not limited to Polytetrafluoroethylene (PTFE), expanded PTFE, glass filled PTFE, vulcanized or peroxide-crosslinked ethylene-propylene-diene rubber (EPDM) or ethylene-propylene rubber (EPM), fluoroelastomer, nitrile butadiene rubber, tetrafluoroethylene-perfluoroalkyl vinyl ether copolymer (PFA).

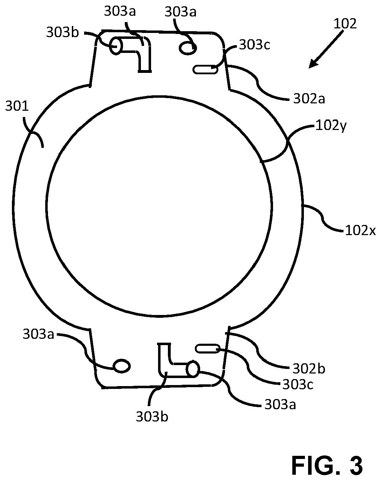

Referring to Fig. 3, the gasket (102) comprises at least two extended portions (302a, 302b) overlapping a predefined part of the cell frame around the channels and the pathways. The extended portions comprise a plurality of apertures (303a, 303b) to accommodate the channels and the pathways present on the cell frame, respectively. Hence the extended portions (302a, 302b) are placed at 180 degrees apart.

The extended portions (302a, 302b) of the gasket (102) furthermore comprises the apertures (303c) to accommodate the protruding parts of the cell frame. The gasket (102) is aligned on the cell frame such that the apertures (303a, 303b, 303c) on the gasket (102) are positioned in accordance with the channels, the pathways and the protruding parts of the cell frame.

According to an alternate embodiment herein, the extended portions can be of indefinite shape, wherein the shape depends on the various factors including but not limiting to placement and structure of the pathways, the number of channels and protruding parts etc. However, according to alternate embodiment, entire outer peripheral edge of the gasket can be extended to include the apertures, thus eliminating the need for the extended portions.

Referring back to Fig. 1B, the cell element (103) placed in the groove of the cell frame (101) is either a bipolar plate or a cell membrane. The surface area of the cell element (103) is designed so that the area does not surround the transverse channels in-order to minimize the parasitic shunt currents, thus making the arrangement energy efficient. Other cell components such as, but not limited to electrodes and spacers are suspended in the central opening of the cell frame (101).

The stack is configured to be either round, square or rectangular in shape based on the functionality requirements of the stack. In appropriate alternative embodiments, the cell frame (101) has a non-circular shape, e.g., a rectangular disk shape, an oval shape, or a polygonal shape with fewer or more than four corners.

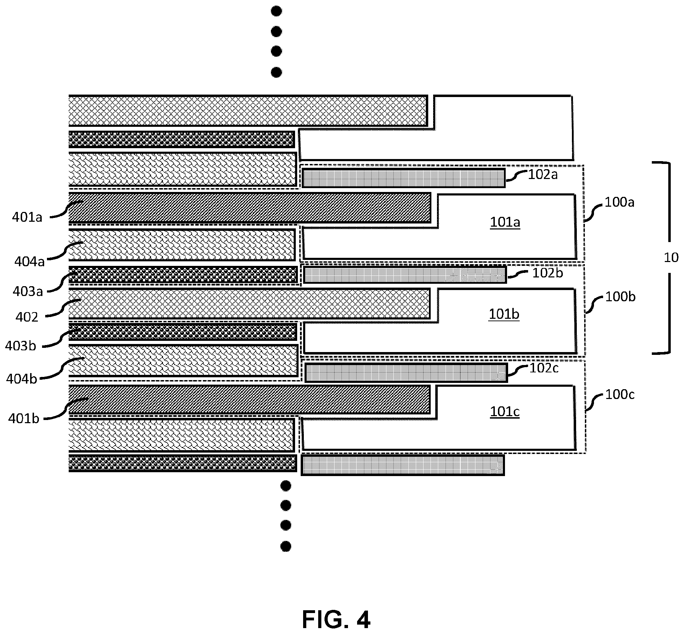

Fig 4 is a cross sectional view of a cell arrangement according to claim 1.

With respect to Fig. 4, the cell (10) is assembled with two cell frame assemblies (100): a bipolar-plate assembly (100a) and a cell-membrane assembly (100b). The bipolar-plate assembly (100a) and the cell-membrane assembly (100b) is assembled according to the cell frame assembly (100) described in Fig. 1. The bipolar-plate assembly (100a) comprises a bipolar plate (401a) interposed between a first cell frame (101a) and a first gasket (102a). Similarly, the cell-membrane assembly (100b) comprises a cell membrane (402) interposed between a second cell frame (101b) and a second gasket (102b). The cell frames (101a, 101b) used in both assemblies can be identical, however the arrangement of the successive cell frames (101a, 101b) differs between the assemblies. The bipolar-plate assemblies and the cell-membrane assemblies can be stacked together in an alternating pattern between the end plates, wherein the successive cell frames of the assemblies can be arranged by relatively rotating the cell frames by 180 degrees with respect to each other. In such an embodiment, the cell frame (101a) of the bipolar-plate assembly (100a) is rotated 180 degrees with respect to the cell frame (101b) of the cell-membrane assembly (100b).

As seen from Fig. 4, each cell frame assembly (100) further comprises at least one electrode and at least one spacer that are placed in the central opening of the cell frame (101). Therefore, a first electrode (403a) and a first spacer (404a) are enclosed between the first bipolar plate (101a) of the bipolar-plate assembly (100a) and the cell membrane (402) of the cell membrane assembly (100b), wherein the spacer (404a) is placed next to the bipolar plate (401a) and the first electrode (403a) is placed next to the first spacer (404a). Similarly, a second electrode (403b) and a second spacer (404b) are enclosed between the cell membrane (402) of the cell-membrane assembly (100b) and a bipolar plate (401b) of the bipolar-plate assembly (100c) of an adjacent cell such that the second electrode (403b) is placed next to the cell membrane (402) and the second spacer (404b) is placed next to the electrode (403b). When the bipolar-plate assembly (100a) and the cell membrane assembly (100b) are stacked together, the first electrode (403a) of bipolar-plate assembly (100a) and the second electrode (403b) of the cell-membrane assembly (100b) will be placed on either side of the cell membrane (402) and the spacers (404a, 404b) press the electrodes (403a, 403b) against the cell membrane (402) to achieve the zero-gap configuration.

The peripheral edge of the electrodes (403a, 403b) and the peripheral edge of the spacers (404a, 404b) is smaller than or equal to the inner peripheral edge (101y) of the cell frame (101) so that the electrodes (403a, 403b) and the spacers (404a, 404b) are placed in the central opening (201) of the cell frame (101) in order to protect the electrodes and ensure proper sealing of the cell to avoid leakage of the electrolyte solution.

When the cells are clamped and compressed between the first end plate and the second end plate, the cell frame (101a) from the bipolar-plate assembly (100a) compresses the gasket (102b) of the cell-membrane assembly (100b) to hold the cell membrane (402). Similarly, the cell frame (101b) of the cell-membrane assembly (100b) compresses the gasket (102c) of the adjacent bipolar-plate assembly (100c) to hold the bipolar plate (401b) in place. The cell frames (101a, 101c) of the bipolar-plate assemblies (100a, 100c) are identical.

At the first end plate or the second end plate of the stack, according to alignment of the cell elements in the stack, an additional gasket is placed to provide compression to the first cell or the end cell. Therefore, the total number of gaskets in the stack is one more than the number of cell frames.

Another embodiment of the invention demonstrates a simple adaptation of the cell frame assembly (100) to receive the cell element with different thicknesses. The gasket (102) is compressed to adapt according to variable thickness of the cell element (103). The thickness of the gasket (102) is calculated based on the thickness of the cell element (103), where following equation is satisfied:

$$t \geq \left( \frac{(|d| + t_0)}{c} \right)$$

wherein t is thickness of the gasket (102) before compression, d is absolute value of gap between the surface of cell element (103) facing the gasket (102) and the peripheral edge of the groove of the cell element (103) in compressed state (as shown in Fig. 5B, 5C), $t_0$ is tolerance of the gasket (102), c is compressibility of the gasket (102) in percentage.

Fig 5A, 5B and Fig. 5C represent cross-section view of the cell assembly to illustrate compression of gasket according to different embodiments of the present invention. The gasket (102) of the cell frame assembly (100) is adapted to variably accommodate different thickness of the cell element (103) inserted into the groove (202) of the cell frame (101). The gasket (102) is configured to compensate the gaps formed due to different thickness of the cell element (103) and seal the space between the two adjacent cell frames to avoid leakage of the electrolyte.

With respect to Fig. 5A, according to one embodiment of the present invention, the thickness of the cell element (103) is same as the depth of the groove (202) of the cell frame (101b). Upon applying pressure, the gasket (102) has uniform thickness across the overlapping area in contact with the cell element (103) and the cell frame (101), thus sealing the space between adjacent cell frame assemblies.

With respect to Fig. 5B, according to one embodiment of the present invention, the thickness of the cell element (103) is lesser than the depth of the groove (202) of the cell frame (101b). Upon applying pressure, as the cell frame (101a) compresses the gasket (102) against the cell frame (101b) and the cell element (103), the thickness of the gasket (102") in contact with the cell frame (101) has reduced, and the thickness of the gasket (102') overlapping the cell element (103) is greater compared to the thickness of the gasket (102") in contact with the cell frame (101) as the gasket (102) fills in space between the cell element (103) surface in contact with the first surface of the gasket (102) and the cell frame (101b) in contact with the second surface of the gasket (102).

With respect to Fig. 5C, according to one embodiment of the present invention, the thickness of the cell element (103) is greater than the depth of the groove (202) of the cell frame (101b). Upon applying pressure, as the gasket (102) is compressed between the cell element and the cell frame (101b), the thickness of the gasket (102') overlapping the cell element (103) is less compared to the thickness of gasket (102") in contact with the cell frame (101b).

Hereinafter, an example of the present invention is described. It will be understood that the example is only illustrative for the purpose of describing the overlapping aspect of the cell frame assembly according to the present invention and is not intended to limit the present invention in any way.

Considering a pressurized alkaline water electrolyser with circular cell components, each cell comprises two cell frames, two gaskets, one bipolar plate and one cell membrane. The overlapping aspect of the present invention is illustrated with respect to the diameter of the cell components. The cell components are defined by a predetermined diameter as mentioned below:

> Inner diameter of cell frame: 350mm
> Outer diameter of cell frame: 490mm
> Inner diameter of the gasket: 350mm
> Outer diameter of the gasket: 405mm
> Diameter of the cell element: 385mm

When the cell components are arranged as per the cell frame assembly depicted in Fig. 1B, the dimensions of the cell components enable the gasket to overlap part the cell frame and part of the cell element.

> Gasket overlapping part of the cell element is calculated as diameter of cell element minus the inner diameter of gasket: 35mm
> Gasket overlapping part of the cell frame is calculated as outer diameter of gasket minus the diameter of the cell element: 20mm

The above detailed description of various embodiments clearly discloses advantages of the present invention to provide a cell frame assembly which reduces the complexity of frame fabrication. The cell frame together with gasket ensures a secure and reliable seal, reducing the risk of leaks and ensuring the system operates as intended.

The foregoing description of the specific embodiments will so fully reveal the general nature of the embodiments herein that others can, by applying current knowledge, readily modify and/or adapt for various applications such specific embodiments without departing from the wording of the claims and, therefore, such adaptations and modifications should and are intended to be comprehended within the meaning and range of equivalents of the disclosed embodiments.

It is also to be understood that the following claims are intended to cover all the generic and specific features of the embodiments described herein and all the statements of the scope of the embodiments which as a matter of language might be said to fall there between.

## Claims

1. An electrolyser, preferably alkaline water electrolyser, comprising:

   a first end plate and a second end plate;
   a plurality of cells serially stacked in-between the first end plate and the second end plate;
   wherein each cell (10) comprises:

   a bipolar-plate assembly (100a), comprising a bipolar plate (401a) placed between a first cell frame (101a) and a first gasket (102a);
   wherein the first gasket (102a) is assembled to overlap a predefined part of the first cell frame (101a) and a predefined part of the bipolar plate (401a);
   a cell-membrane assembly (100b), comprising a cell membrane (402) placed between a second cell frame (101b) and a second gasket (102b);
   wherein the second gasket (102b) is assembled to overlap a predefined part of the second cell frame (101b) and a predefined part of the cell membrane (402);
   a plurality of electrodes, and a plurality of spacers;
   wherein a first electrode (403a) and a first spacer (404a) are placed in-between the bipolar plate (401a)
   of the bipolar-plate assembly (100a) and the cell
   membrane (402) of the cell-membrane assembly (100b); and
   wherein a second electrode (403b) and a second spacer (404b) are placed in-between the cell membrane (402) of the cell-membrane assembly (100b) and the bipolar plate (401b) of the bipolar-plate assembly (100c) of an adjacent cell.

2. The electrolyser according to claim 1, wherein the first cell frame (101a) is structurally identical to the second cell frame (101b).

3. The electrolyser according to claim 2, wherein the bipolar-plate assembly (100a) and the cell-membrane assembly (100b) are arranged in an alternating pattern, wherein the first cell frame (101a) and the second cell frame (101b) are arranged by alternately rotating the cell frames by 180 degrees.

4. The electrolyser according to claim 1 or 2 or 3, wherein the first gasket (102a) of the bipolar-plate assembly (100a) is compressed between a cell frame of an adjacent cell-membrane assembly and the first cell frame (101a) and the bipolar plate (401a) of the bipolar-plate assembly (100a), and wherein the second gasket (102b) of the cell-membrane assembly (100b) is compressed between the first cell frame (101a) of the bipolar-plate assembly (100a) and the second cell frame (101b) and the cell membrane (402) of the cell-membrane assembly (100b).

5. The electrolyser according to claim 1, wherein an outer peripheral edge (102x) of the first gasket (102a) extends outwards over a peripheral edge (103x) of the bipolar plate (401a) in the direction of an outer peripheral edge (101x) of the first cell frame (101a) and wherein an inner peripheral edge (102y) of the first gasket (102a) extends inwards over the peripheral edge (103x) of the bipolar plate (401a) in the direction of an inner peripheral edge (101y) of the first cell frame (101a).

6. The electrolyser according to claim 1, wherein an outer peripheral edge (102x) of the second gasket (102b) extends outwards over a peripheral edge (103x) of the cell membrane (402) in the direction of an outer peripheral edge (101x) of the second cell frame (101b) and an inner peripheral edge (102y) of the second gasket (102b) extends inwards over the peripheral edge (103x) of the cell membrane (402) in the direction of an inner peripheral edge (101y) of the second cell frame (101b).

7. The electrolyser according to claim 2, wherein the peripheral edge of the first electrode (403a) and the second electrode (403b) is either lesser than or equal to the inner peripheral edge of the cell frame; wherein the peripheral edge of the first spacer (404a) and the second spacer (404b) is either smaller than or equal to the inner peripheral edge of the cell frame.

8. The electrolyser according to claim 4, wherein the total number of gaskets in the stack is one more than the number of cell frames, wherein an additional gasket is placed either after the first end plate or before the second end plate.

9. The electrolyser according to claim 2, wherein the first cell frame (101a) and the second cell frame (101b) comprises a central opening (201), a groove (202) for accommodating the bipolar plate (401) or the cell membrane (402), respectively, a plurality of transverse channels (203a-203d) and at least two pathways (204a, 204b); wherein each pathway interconnects at least one channel to the central opening.

10. The electrolyser according to claim 9, wherein the two pathways (204a, 204b) are spaced apart by 180 degrees.

11. The electrolyser according to claim 10, wherein the first cell frame (101a) and the second cell frame (101b) further comprises a bridge (205) at junction of the pathway (204a or 204b) and the central opening (201).

12. The electrolyser according to claim 10 or 11, wherein the first cell frame (101a) and the second cell frame (101b) comprises a first surface and a second surface, wherein the groove (202) is present on the first surface of the cell frame (101) and wherein the pathways (204a or 204b) and the bridge (205) are located on the second surface of the cell frame (101).

13. The electrolyser according to claim 9, wherein the first gasket (102a) and the second gasket (102b) comprises at least two extended portions (302a, 302b) overlapping a predefined part of the cell frames (101) around the channels (203a - 203d) and the pathways (204a or 204b).

14. The electrolyser according to claim 7, wherein the first cell frame (101a) and the second cell frame (101b) comprises a plurality of protruding parts (206a) and recesses (206b) that fit into each other to align the cell frames (101) and the gaskets (102) in the cell frame assembly (100).

15. The electrolyser according to claim 9, wherein the groove (202) comprises a spacing between a peripheral edge of the groove (202) and the peripheral edge (103x) of the bipolar plates (401) or the cell membrane (402) to compensate thermal expansion or contraction of the bipolar plates (401) or the cell membrane (402).


**Patentansprüche**

1. Ein Elektrolyseur, vorzugsweise alkalischer Wasserelektrolyseur, bestehend aus:

   einer ersten Endplatte und einer zweiten Endplatte;
   einer Vielzahl von Zellen, die seriell zwischen der ersten Endplatte und der zweiten Endplatte gestapelt sind;
   wobei jede Zelle (10) umfasst:

   eine Bipolarplatten-Baugruppe (100a), die eine Bipolarplatte (401a) umfasst, platziert zwischen einem ersten Zellrahmen (101a) und einer ersten Dichtung (102a);
   wobei die erste Dichtung (102a) so montiert ist, dass sie einen vordefinierten Teil des ersten Zellrahmens (101a) und einen vordefinierten Teil der Bipolarplatte (401a) überlappt;
   eine Zellmembran-Baugruppe (100b), die eine Zellmembran (402) umfasst, platziert zwischen einem zweiten Zellrahmen (101b) und einer zweiten Dichtung (102b); wobei die zweite Dichtung (102b) so montiert ist, dass sie einen vordefinierten Teil des zweiten Zellrahmens (101b) und einen vordefinierten Teil der Zellmembran (402) überlappt;
   eine Vielzahl von Elektroden und eine Vielzahl von Abstandhaltern;
   wobei eine erste Elektrode (403a) und ein erster Abstandhalter (404a) zwischen Bipolarplatte (401a), Bipolarplatten-Baugruppe (100a) und Zellmembran (402) der Zellmembran-Baugruppe (100b) angeordnet sind; und
   wobei eine zweite Elektrode (403b) und ein zweiter Abstandhalter (404b) zwischen der Zellmembran (402) der Zellmembran-Baugruppe (100b) und der Bipolarplatte (401b) der Bipolarplatten-Baugruppe (100c) einer benachbarten Zelle angeordnet sind.

2. Elektrolyseur nach Anspruch 1, wobei der erste Zellrahmen (101a) mit dem zweiten Zellrahmen (101b) baugleich ist.

3. Elektrolyseur nach Anspruch 2, wobei die Bipolarplatten-Baugruppe (100a) und die Zellmembran-Baugruppe (100b) in einem wechselnden Muster angeordnet sind, wobei der erste Zellrahmen (101a) und der zweite Zellrahmen (101b) durch wechselndes Drehen der Zellrahmen um 180 Grad angeordnet ist.

4. Elektrolyseur nach Anspruch 1, 2 oder 3, wobei die erste Dichtung (102a) der Bipolarplatten-Baugruppe (100a) zwischen einem Zellrahmen einer benachbarten Zellmembran-Baugruppe und dem ersten Zellrahmen (101a) und der Bipolarplatte (401a) der Bipolarplatten-Baugruppe (100a) zusammengedrückt wird, und wobei die zweite Dichtung (102b) der Zellmembran-Baugruppe (100b) zwischen dem ersten Zellrahmen (101a) der Bipolarplatten-Baugruppe (100a) und dem zweiten Zellrahmen (101b) und der Zellmembran (402) der Zellmembran-Baugruppe (100b) zusammengedrückt wird.

5. Elektrolyseur nach Anspruch 1, wobei sich eine Umrandung (102x) der ersten Dichtung (102a) nach außen über eine Umrandung (103x) der Bipolarplatte (401a) in Richtung einer Umrandung (101x) des ersten Zellrahmens (101a) erstreckt und ein Innenrand (102y) der ersten Dichtung (102a) sich nach innen über den Rand (103x) der Bipolarplatte (401a) in Richtung eines Innenrands (101y) des ersten Zellrahmens (101a) erstreckt.

6. Elektrolyseur nach Anspruch 1, wobei sich eine äußere Umrandung (102x) der zweiten Dichtung (102b) nach außen über eine Umrandung (103x) der Zellmembran (402) in Richtung einer äußeren Umrandung (101x) des zweiten Zellrahmens (101b) erstreckt und eine innere Umrandung (102y) der zweiten Dichtung (102b) sich nach innen über die Umrandung (103x) der Zellmembran (402) in Richtung einer inneren Umrandung (101y) des zweiten Zellrahmens (101b) erstreckt.

7. Elektrolyseur nach Anspruch 2, wobei die Umrandung der ersten Elektrode (403a) und der zweiten Elektrode (403b) kleiner/gleich der inneren Umrandung des Zellrahmens ist; wobei die Umrandung des ersten Abstandhalters (404a) und des zweiten Abstandhalters (404b) kleiner/gleich der inneren Umrandung des Zellrahmens ist.

8. Elektrolyseur nach Anspruch 4, wobei die Gesamtzahl der Dichtungen im Stack eine mehr als die Anzahl der Zellrahmen beträgt, wobei eine zusätzliche Dichtung entweder nach der ersten Endplatte oder vor der zweiten Endplatte angeordnet ist.

9. Elektrolyseur nach Anspruch 2, wobei der erste Zellrahmen (101a) und der zweite Zellrahmen (101b) eine zentrale Öffnung (201), eine Nut (202) zur Aufnahme der Bipolarplatte (401) bzw. der Zellmembran (402), eine Vielzahl von Querkanälen (203a-203d) und mindestens zwei Pfade (204a, 204b) umfassen, wobei jeder Pfad mindestens einen Kanal mit der zentralen Öffnung verbindet.

10. Elektrolyseur nach Anspruch 9, wobei die beiden Pfade (204a, 204b) um 180 Grad voneinander abgesetzt sind.

11. Elektrolyseur nach Anspruch 10, wobei der erste Zellrahmen (101a) und der zweite Zellrahmen (101b) eine Brücke (205) an der Verbindung des Weges (204a oder 204b) und der zentralen Öffnung umfasst (201).

12. Elektrolyseur nach Anspruch 10 oder 11, wobei der erste Zellrahmen (101a) und der zweite Zellrahmen (101b) eine erste Oberfläche und eine zweite Oberfläche aufweisen, wobei die Nut (202) auf der ersten Oberfläche des Zellrahmens (101) vorhanden ist und die Pfade (204a oder 204b) und die Brücke (205) auf der zweiten Oberfläche des Zellenrahmens angeordnet sind (101).

13. Elektrolyseur nach Anspruch 9, wobei die erste Dichtung (102a) und die zweite Dichtung (102b) mindestens zwei verlängerte Abschnitte (302a, 302b) umfassen, die einen vordefinierten Teil der Zellrahmen (101) um die Kanäle (203a-203d) und die Pfade überlappen (204a oder 204b).

14. Elektrolyseur nach Anspruch 7, wobei der erste Zellrahmen (101a) und der zweite Zellrahmen (101b) eine Vielzahl von vorstehenden Teilen (206a) und Aussparungen (206b) aufweisen, die ineinander passen, um die Zellrahmen (101) und die Dichtungen (102) in der Zellrahmenanordnung auszurichten (100).

15. Elektrolyseur nach Anspruch 9, wobei die Nut (202) einen Abstand zwischen einer Umrandung der Nut (202) und der Umrandung (103x) der Bipolarplatten (401) oder der Zellmembran (402) aufweist, um eine thermische Ausdehnung oder Kontraktion der Bipolarplatte (401) oder der Zellmembran zu kompensieren (402).

## Revendications

1. Un électrolyseur, de préférence un électrolyseur d'eau alcaline, comprenant :

une première plaque d'extrémité et une seconde plaque d'extrémité ;
une pluralité de cellules empilées en série entre la première plaque d'extrémité et la seconde plaque d'extrémité;
dans lequel chaque cellule (10) comprend:

un ensemble de plaques bipolaires (100a), comprenant une plaque bipolaire (401a) placée entre un premier cadre de cellule (101a) et un premier joint (102a);
dans lequel le premier joint (102a) est assemblé pour chevaucher une partie prédéfinie du premier cadre de cellule (101a) et une partie prédéfinie de la plaque bipolaire (401a)
un ensemble membrane cellulaire (100b), comprenant une membrane cellulaire (402) placée entre un deuxième cadre cellulaire (101b) et un deuxième joint (102b);
dans lequel le second joint (102b) est assemblé de manière à chevaucher une partie prédéfinie du second cadre cellulaire (101b) et une partie prédéfinie de la membrane cellulaire (402);
plusieurs électrodes et plusieurs entretoises sont prévues;
dans lequel une première électrode (403a) et une première entretoise (404a) sont placées entre la plaque bipolaire (401a) de l'ensemble plaque bipolaire (100a) et la membrane cellulaire (402) de l'ensemble membrane cellulaire (100b);

dans lequel une seconde électrode (403b) et une seconde entretoise (404b) sont placées entre la membrane cellulaire (402) de l'ensemble membrane cellulaire (100b) et la plaque bipolaire (401b) de l'ensemble plaque bipolaire (100c) d'une cellule adjacente.

2. Électrolyseur selon la revendication 1, dans lequel le premier cadre de cellule (101a) est structurellement identique au deuxième cadre de cellule (101b).

3. Électrolyseur selon la revendication 2, dans lequel l'ensemble plaque bipolaire (100a) et l'ensemble membrane cellulaire (100b) sont disposés en alternance, les premier et second cadres cellulaires (101a) et (101b) étant disposés en alternant les cadres cellulaires de 180 degrés.

4. Électrolyseur selon la revendication 1, 2 ou 3, dans lequel le premier joint (102a) de l'ensemble plaque bipolaire (100a) est comprimé entre un cadre de cellule d'un ensemble cellule-membrane adjacent et le premier cadre de cellule (101a) et la plaque bipolaire (401a) de l'ensemble plaque bipolaire (100a), et dans lequel le second joint (102b) de l'ensemble cellule-membrane (100b) est comprimé entre le premier cadre de cellule (101a) de l'ensemble plaque bipolaire (100a) et le second cadre de cellule (101b) et la membrane cellulaire (402) de l'ensemble cellule-membrane (100b).

5. Électrolyseur selon la revendication 1, dans lequel un bord périphérique extérieur (102x) du premier joint (102a) s'étend vers l'extérieur sur un bord périphérique (103x) de la plaque bipolaire (401a) dans la direction d'un bord périphérique extérieur (101x) du premier cadre de cellule (101a) et dans lequel un bord périphérique intérieur (102y) du premier joint (102a) s'étend vers l'intérieur sur le bord périphérique (103x) de la plaque bipolaire (401a) dans la direction d'un bord périphérique intérieur (101y) du premier cadre de cellule (101a).

6. Électrolyseur selon la revendication 1, dans lequel un bord périphérique extérieur (102x) du deuxième joint (102b) s'étend vers l'extérieur sur un bord périphérique (103x) de la membrane cellulaire (402) en direction d'un bord périphérique extérieur (101x) du deuxième cadre cellulaire (101b) et un bord périphérique intérieur (102y) du deuxième joint (102b) s'étend vers l'intérieur sur le bord périphérique (103x) de la membrane cellulaire (402) en direction d'un bord périphérique intérieur (101y) du deuxième cadre cellulaire (101b).

7. Électrolyseur selon la revendication 2, dans lequel le bord périphérique de la première électrode (403a) et de la seconde électrode (403b) est inférieur ou égal au bord périphérique intérieur du cadre de cellule ; dans lequel le bord périphérique de la première entretoise (404a) et de la seconde entretoise (404b) est inférieur ou égal au bord périphérique intérieur du cadre de cellule.

8. Électrolyseur selon la revendication 4, dans lequel le nombre total de joints dans la pile est supérieur de un au nombre de cadres de cellules, dans lequel un joint supplémentaire est placé soit après la première plaque d'extrémité, soit avant la seconde plaque d'extrémité.

9. Électrolyseur selon la revendication 2, dans lequel le premier cadre de cellule (101a) et le second cadre de cellule (101b) comprennent une ouverture centrale (201), une rainure (202) pour loger respectivement la plaque bipolaire (401) ou la membrane cellulaire (402), plusieurs canaux transversaux (203a-203d) et au moins deux voies (204a, 204b) ; chaque voie reliant au moins un canal à l'ouverture centrale.

10. Électrolyseur selon la revendication 9, dans lequel les deux voies (204a, 204b) sont espacées de 180 degrés.

11. Électrolyseur selon la revendication 10, dans lequel le premier cadre de cellule (101a) et le deuxième cadre de cellule (101b) comprennent en outre un pont (205) à la jonction du chemin (204a ou 204b) et de l'ouverture centrale (201).

12. Électrolyseur selon la revendication 10 ou 11, dans lequel le premier cadre de cellule (101a) et le second cadre de cellule (101b) comprennent une première surface et une seconde surface, dans lequel la rainure (202) est présente sur la première surface du cadre de cellule (101) et dans lequel les voies (204a ou 204b) et le pont (205) sont situés sur la seconde surface du cadre de cellule (101).

13. Électrolyseur selon la revendication 9, dans lequel le premier joint (102a) et le deuxième joint (102b) comprennent au moins deux parties étendues (302a, 302b) chevauchant une partie prédéfinie des cadres de cellule (101) autour des canaux (203a-203d) et des voies (204a ou 204b).

14. Électrolyseur selon la revendication 7, dans lequel le premier cadre de cellule (101a) et le second cadre de cellule (101b) comprennent une pluralité de parties saillantes (206a) et d'évidements (206b) qui s'emboîtent les uns dans les autres pour aligner les cadres de cellule (101) et les joints (102) dans l'ensemble cadre de cellule (100).

**15.** Électrolyseur selon la revendication 9, dans lequel la rainure (202) comprend un espacement entre un bord périphérique de la rainure (202) et le bord périphérique (103x) des plaques bipolaires (401) ou de la membrane cellulaire (402) pour compenser la dilatation ou la contraction thermique de la plaque bipolaire (401) ou de la membrane cellulaire (402).

**FIG. 1A**

FIG. 1B

**FIG. 1**

**FIG. 2A**

**FIG. 2B**

**FIG. 2**

**FIG. 3**

FIG. 4

**FIG. 5A**

**FIG. 5B**

**FIG. 5C**

**FIG. 5**

**EP 4 461 849 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 7591932 B2
- EP 3696298 A1
- US 8349151 B2
- EP 3608445 A1, THYSSENKRUPP
- EP 2993254 A1
- EP 4151775 A1